(19)

Europäisches
Patentamt
European
Patent Office
Office européen
des brevets

(11) **EP 2 223 790 A1**

(12) **EUROPEAN PATENT APPLICATION**
published in accordance with Art. 153(4) EPC

(43) Date of publication:
**01.09.2010 Bulletin 2010/35**

(21) Application number: **08866256.4**

(22) Date of filing: **24.12.2008**

(51) Int Cl.:
*B29C 47/82* (2006.01)    *B29C 47/00* (2006.01)
*B29C 47/50* (2006.01)    *B29C 47/66* (2006.01)
*C08J 9/12* (2006.01)    *B29K 23/00* (2006.01)
*B29K 105/04* (2006.01)

(86) International application number:
**PCT/JP2008/073379**

(87) International publication number:
**WO 2009/084523 (09.07.2009 Gazette 2009/28)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **27.12.2007 JP 2007336474**

(71) Applicant: **Asahi Fiber Glass Company, Limited
Tokyo 101-0045 (JP)**

(72) Inventor: **ITADANI, Toru
Tokyo 101-0045 (JP)**

(74) Representative: **Hartz, Nikolai
Wächtershäuser & Hartz
Patentanwaltspartnerschaft
Weinstrasse 8
80333 München (DE)**

(54) **PROCESS FOR PRODUCING POLYPROPYLENE RESIN FOAM**

(57)    Disclosed is a process for producing a polypropylene-based resin foam by subjecting a linear polypropylene-based resin, which has a melt tension at 230°C of from 5 to 30 g and satisfies the below-described formula (1) in which MFR stands for a melt flow rate of the linear polypropylene-based resin at 230°C and MT stands for the melt tension at 230°C, to melt extrusion through an extruder while injecting carbon dioxide into the resulting molten resin to foam the molten resin. The process includes subjecting the extruder to temperature control such that the extruder has a temperature of from 200 to 240°C at a position of a cylinder barrel thereof, where the carbon dioxide is to be introduced, and the cylinder barrel has a temperature of from 175 to 190°C at a position before the foaming; and then discharging the molten resin into atmospheric pressure with a discharge rate of the molten resin per opening area of a die being controlled to give a resin pressure of from 5 to 20 MPa at a position immediately proximal to an opening of the die, thereby foaming the molten resin. The process of the present invention can provide a polypropylene-based resin foam having a high expansion ratio, uniformly dispersed foam cells and a good

$$Log(MT) > -1.33 Log(MFR) + 1.2 \qquad (1)$$

EP 2 223 790 A1

## Description

### Technical Field

This invention relates to a process for producing a polypropylene-based resin foamhaving a high expansion ratio, uniformly dispersed foam cells and a good surface appearance.

### Background Art

Extruded foams making use of polypropylene resin are known over years. For example, proposed in Patent Document 1 is a foam obtained by foaming a polypropylene-based resin composition, which contains a linear polypropylene-based resin having a melt tension at 230°C of from 5 to 30 g, to an expansion ratio of 10 times or greater with a foaming agent that contains at least carbon dioxide in a supercritical state. This foam (foamed board) is described to have excellent extrusion foamability and superb heat insulating performance and to be recyclable, economical and stably and continuously producible.

Further, a production process in the patent document is described to perform production by mixing the polypropylene-based resin composition with a foaming agent, which contains at least carbon dioxide in a supercritical state, and subjecting the resulting resin mixture to melt extrusion at a temperature of from 160 to 250°C because a melt extrusion temperature lower than 160°C leads to a reduction in the dissolution and diffusion of the supercritical carbon dioxide into the resin mixture while a melt extrusion temperature higher than 250°C results in the initiation of occurrence of degradation such as thermal cleavage of molecular chains of the polypropylene-based resin.

Patent Document 1: WO 2007/004524 A1

### Disclosure of the Invention

### Problem to Be Solved by the Invention

Under the extrusion conditions in the above-described document, however, the resulting foam, in some instances, was inferior in surface appearance or failed to achieve a high expansion ratio and hence to provide sufficient heat insulating performance. In addition, the production of the above-described foam requires large facilities, and in some instances, was inferior in workability.

In each working example in the above-described document, for example, the resin was subjected to melt extrusion by setting the cylinder barrel temperature at 180°C. When a resin is subjected to extrusion foaming at this temperature, however, the resulting foam involves problems especially in that it is inferior in surface appearance and also in that it is inferior in heat insulating performance as its cell diameters are uneven and it is not provided with a high expansion ratio.

In each working example in the above-described document, a resin or the like was kneaded in two stages for a relatively long time and then extruded by a tandem extruder. The resulting foam was relatively good in the distribution of its cell diameters, but was accompanied by a problem in that it was still inferior in surface appearance. For foaming molding, the use of a single extruder by a single extrusion process is desired from the aspects of handling and cost. When a foam is produced under the above-described extrusion conditions by this single extruder, problems are pronounced *inter alia* in that the resultant foam is inferior in surface appearance and cannot be provided with a high expansion ratio.

In the above-described document, carbon dioxide which has been brought into a supercritical state is fed as a foaming agent in an attempt to increase the dispersibility of the foaming agent into a resin. Under the extrusion conditions in the above-described documents, however, the resulting foam is accompanied by a problem in that its surface appearance is still inferior. From the aspects of handling and cost, on the other hand, it is desired to use, as a foaming agent, liquefied carbon dioxide which has not been brought into a supercritical state. Under the extrusion conditions in the above-described document, however, problems are pronounced *inter alia* in that the resulting foam is inferior in surface appearance and is not provided with a high expansion ratio.

An object of the present invention is, therefore, to provide a process for producing a polypropylene-based resin foam having a high expansion ratio, uniformly dispersed foam cells and a good surface appearance.

### Means for Solving the Problem

The above-described object can be achieved by the present invention to be described hereinafter. Described specifically, the present invention provides a process for producing a polypropylene-based resin foam by subjecting a linear polypropylene-based resin, which has a melt tension at 230°C of from 5 to 30 g and satisfies the below-described formula (1) in which MFR stands for a melt flow rate of the linear polypropylene-based resin at 230°C and MT stands for the melt tension at 230°C, to melt extrusion through an extruder while injecting carbon dioxide into the resulting molten resin to foam the molten resin, which comprises subjecting the extruder to temperature control such that the extruder has a temperature of from 200 to 240°C at a position of a cylinder barrel thereof, where the carbon dioxide is to be introduced, and the cylinder barrel has a temperature of from 175 to 190°C at a position before the foaming; and then discharging the molten resin into atmospheric pressure with a discharge rate of the molten resin per opening area of a die being controlled to give a resin pressure of from 5 to 20 MPa at a position immediately proximal to an opening of the die, thereby foaming the molten resin.

$$\mathrm{Log(MT)>-1.33Log(MFR)+1.2} \qquad (1)$$

In the present invention as described above, the extruder can preferably be a singe-stage extruder (single extruder). The single extruder can preferably have a cylinder barrel diameter of from 20 to 300 mm and an L/D ratio of from 20 to 40. The extruder can preferably be a tandem extruder having a cylinder barrel diameter of from 20 to 300 mm and an L/D ratio of from 20 to 40, and a second-stage extruder can preferably be greater in cylinder barrel diameter than a first -stage extruder. The second-stage extruder can preferably be set at a screw rotational speed not higher than 1/4 of that of the first-stage extruder. The carbon dioxide can preferably be liquefied carbon dioxide which is not in a supercritical state.

**Advantageous Effects of the Invention**

According to the present invention, it is possible to provide a process for producing a polypropylene-based resin foam having a high expansion ratio, uniformly dispersed foam cells and a good surface appearance.

**Best Mode for Carrying out the Invention**

The present invention will hereinafter be described in further detail based on a best mode for carrying it out. The resin for use in the present invention in the present invention contains at least a linear polypropylene-based resin (hereinafter called "the resin A") having specific physical properties. It is essential for the resin A to have a melt tension at 230°C of from 5 to 30 g, with a melt tension of from 6.5 to 20 g being preferred, and a melt tension of from 7.5 to 10 g being more preferred. If the melt tension of the resin A is lower than 5 g, cells tend to collapse upon foaming the resin A. Such a low melt tension is hence not preferred. If the melt tension of the resin A is higher than 30 g, on the other hand, no sufficient growth of cells takes place upon foaming the resin A. Such a high melt tension is thus not preferred either.

In addition, the resin A may have a melt flow rate (MFR) at 230°C of from 5 to 30, with an MFR of from 5 to 20 being more preferred. It is necessary for the present invention that the MFR and the melt tension (MT) at 230°C satisfy a correlation of the below-described formula (1). It is to be noted that MFR is determined by a method that conforms with ASTM-D1238.

$$\mathrm{Log(MT)>-1.33Log(MFR)+1.2} \qquad (1)$$

If the resin A fails to satisfy the formula (1) in terms of the correlation between its MT and MFR, an increase in MT provides the resin with unduly low melt flowability, thereby unfavorably developing such an inconvenience that the resin pressure rises to a great extent upon extruding the resin A or failing to obtain sufficient elongation of cell membranes upon foaming the resin A and thus making it difficult to obtain a foam of high expansion ratio. Specifically, the left side of the formula (1) may have a value greater preferably by from 0.5 to 3, particularly preferably by from 0.5 to 2 than that of the right side.

In the present invention, the resin A has to be a linear polymer. The term "linear" means that each of molecular chains of a propylene-based polymer, which makes up the resin A, is a polymerized product of monomer units that propylene monomer is (and an $\alpha$-olefin monomer copolymerizable with the propylene monomer are mutually) polymerized unit by unit in the form of a strand. This linear polymer does not have a crosslinked structure making use of chemical crosslinking or radiation crosslinking or a graft structure containing long-chain branches or the like. Therefore, its production and quality control are relatively easy, and its molecular structure is hardly deteriorated even through repeated heat histories to which the linear polymer is subjected in steps such as re-pelletization applied upon recycling. The use of the linear polymer is preferred accordingly.

In the resin for use in the present invention, a resin other than the resin A, for example, a polypropylene-based resin (hereinafter called "the resin B") can be blended. Examples of the resin B include homopolymer of propylene, copolymers of propylene with α-olefins other than propylene, said copolymers being composed primarily of propylene, and blends of polypropylene-based resins with polyolefin-based resins other than the polypropylene-based resins, such as, for example, polyethylene-based resins. These polyolefin-based resins may be used either singly or in combination.

Among these, preferred for use as the resin B can be polypropylene homopolymer of a relatively large molecular weight, propylene-ethylene copolymers composed primarily of propylene, and blended resins of polypropylene-based resins and polyethylene-based resins because of excellent extrusion foamability and superb performance of the resulting foams.

Examples of the α-olefins, which are other than ethylene and are copolymerizable with ethylene, include, but are not particularly limited to, propylene, 1-butene, 1-pentene, 1-hexene, 4-methyl-1-pentene, 1-heptene, 1-octene, and the like. These α-olefins other than ethylene may be used either singly or in combination. Examples of the α-olefins, which are other than polypropylene and are copolymerizable with propylene, include, but are not particularly limited to, ethylene, 1-butene, 1-pentene, 1-hexene, 4-methyl-1-pentene, 1-heptene, 1-octene, and the like. These α-olefins other than propylene may be used either singly or in combination.

When the resin for use in the present invention contains the resin B, the resin B may amount preferably to 200 parts by weight or less, more preferably to 100 parts by weight or less, particularly preferably to from 40 to 80 parts by weight per 100 parts by weight of the resin A. If the content of the resin B exceeds 200 parts by weight, the resin B gives greater effects to the foamability of the resin A, and in some instances, may significantly inhibit the foamability of the resin A. Such a high content of the resin B is not preferred accordingly.

When a blended resin of a polypropylene-based resin and a polyethylene-based resin is used as the resin B, on the other hand, the content of the polypropylene-based resin in the blended resin may be, but is not particularly limited to, preferably from 40 to 100 wt%, more preferably from 60 to 100 wt%. If the content of the polypropylene-based resin in the blended resin is lower than 40 wt%, the resulting foam may be provided with insufficient mechanical strength and/or heat resistance in some instances.

In the present invention, the resin A is subjected to melt foaming by using a foaming agent that contains at least carbon dioxide. As the carbon dioxide, it is possible to use liquefied carbon dioxide which is or is not in a supercritical state. In the production process according to the present invention, liquefied carbon dioxide which is not in a supercritical state and is considered to be inferior in the dispersibility into resins can be favorably adopted from the viewpoints of economy and handling, because a foam having sufficient performance can be obtained even with such liquefied carbon dioxide although the use of carbon dioxide in a supercritical state as a foaming agent can provide a foam excellent in surface appearance, cell distribution and expansion ratio.

The amount of the foaming agent to be used differs depending upon a tandem extrusion process or a single extrusion process to be described subsequently herein, but the foaming agent with carbon dioxide contained therein may be used as much as preferably from 3 to 20 parts by weight, more preferably from 4 to 10 parts by weight per 100 parts by weight of the resin (the resin A alone or a blend of the resin A and resin B). The use of carbon dioxide in an amount smaller than 3 parts by weight tends to provide the resin with a reduced expansion ratio, fewer cell nuclei and greater cells, so that the resulting foam tends to have lowered heat insulating performance. On the other hand, the use of carbon dioxide in an amount greater than 20 parts by weight results in the formation of large voids in the resulting foam due to the excessive carbon dioxide, and therefore, is not preferred either.

As the amount of carbon dioxide which can be added to the resin, carbon dioxide in a supercritical state may preferably be added in a greater amount compared with carbon dioxide in a non-supercritical state. The use of carbon dioxide in a supercritical state as a foaming agent is advantageous for providing the resin with a higher expansion ratio. However, the production process according to the present invention has made it possible to use liquefied carbon dioxide as a foaming agent as far as a foam product of a resin expansion ratio of from 15 to 30 times or so is concerned.

According to the process of the present invention for the production of a foam, a resin containing the above-described resin A of the specific properties and a foaming agent, which contains at least carbon dioxide, are mixed together by using a foaming apparatus equipped with an extruder and a die installed on a free end of the extruder. After the extruder is subjected to temperature control such that the extruder has a temperature of from 200 to 240°C at a position of its cylinder barrel, where the carbon dioxide is to be introduced, and the cylinder barrel has a temperature of from 175 to 190°C at a position before the foaming, the molten resin is discharged into atmospheric pressure with a discharge rate of the molten resin per opening area of the die being controlled to give a resin pressure of from 5 to 20 MPa at a position immediately proximal to an opening of the die, whereby the molten resin is allowed to foam.

If the temperature of the cylinder barrel in the extruder is lower than 200°C at the position where the carbon dioxide is to be introduced, the resin cannot be sufficiently molten or the pressure of the resin immediately proximal to the opening of the die becomes undulyhigh. Therefore,theinjection ofcarbon dioxide into the molten resin may be hampered and/or an excessive load may be applied on the apparatus. Further, upon kneading the molten resin with the carbon dioxide, the shear stress tends to become larger. Therefore, the resin tends to produce heat and to undergo molecular cleavage, thereby providing the resultant foam with a lowered external appearance and a reduced expansion ratio. Such an excessively low cylinder barrel temperature is not preferred accordingly. If the cylinder barrel temperature exceeds 240°C, on the other hand, the pressure of the resin immediately proximal to the opening of the die is excessively lowered, thereby failing to maintain a resin pressure suited for foaming. The resulting foam may be provided with a reduced expansion ratio, or its resin may be deteriorated. Such an unduly high cylinder barrel temperature is therefore not preferred either.

If the cylinder barrel temperature at the position before the foaming is lower than 175°C, the resin is not allowed to foam to any sufficient extent by the foaming agent so that the resulting foam is provided with a reduced expansion ratio. Such a low cylinder barrel temperature is therefore not preferred. If the cylinder barrel temperature at the position before the foaming is higher than 190°C, on the other hand, the viscosity of the molten resin is considered to drop. As a result, the resulting foam may be provided with a reduced expansion ratio, and moreover, may contain many voids. Such a high cylinder barrel temperature is therefore not preferred either.

It is also preferred to discharge the molten resin into atmospheric pressure to subject it to extrusion foaming by controlling the pressure of the resin (equivalent to a pressure drop) immediately proximal to the opening of the die in the extruder preferably at from 5 to 20 MPa. The pressure drop may be more preferably from 7 to 15 MPa, most preferably from 9 to 15 MPa. A pressure drop lower than 5 MPa tends to cause the carbon dioxide, which is dissolved in the resin, to vaporize inside the extruder and die. Foaming may, therefore, take place inside the apparatus, thereby causing coalescence and excessive growth of cells, a reduction in expansion ratio and a significant reduction in external appearance. Such a low pressure drop is therefore not preferred. On the other hand, a pressure drop higher than 20 MPa results in the application of a large load on the apparatus, and upon formation of cells by foaming, a large shear stress tends to be applied to the cells, thereby causing cell collapse and unevenness in cell structure. Such a high pressure drop is therefore not preferred either. Such incompleteness of the cell structure poses a substantial obstacle for the exhibition of sufficient thermal performance as a foam.

In the production process of the present invention, a single-stage extrusion process making use of a single extruder can be used for foaming the resin. As an alternative, a two-stage extrusion process making use of a tandem extruder can also be used for foaming the resin. In the present invention, the use of the tandem extruder can provide a foam excellent in surface appearance, cell distribution and expansion ratio, but the single extruder can be favorably adopted from the viewpoints of economy and handling because the use of the single extruder can still provide a foam having sufficient properties such as surface appearance, cell distribution and expansion ratio although such a single extruder has conventionally been considered unable to sufficiently spread a foaming agent into a resin.

The discharge rate of the molten resin through the extruder may preferably be from 1 to 1,000 kg/hr. The discharge rate of the molten resin varies depending upon the specification of the extruder. Described specifically, however, the discharge rate of the molten resin may preferably be from approx. 1 to 50 kg/hr for an extruder of a type that the screw diameter is relatively small or from approx. 50 to 1,000 kg/hr for an extruder of a type that the screw diameter is relatively large. An excessively large or small discharge rate of the molten resin makes it difficult to maintain at the position of the die a pressure drop and pressure reduction rate suitable for foaming, and therefore, may fail to provide a foam of a sufficient expansion ratio or may result in a foam with cells collapsed therein.

Preferred as the extruder for use in the present invention is a tandem extruder constructed basically by combining in series two screws in each of which the screw diameter or cylinder barrel diameter (D) is preferably from 20 to 300 mm and the L/D ratio (L: screw length) is preferably from 20 to 40. The use of such a tandem extruder makes it possible to independently control the pressure drop condition and discharge rate of the resin at the position of the die to those suited for foaming by relying upon the rotational speeds of the respective screws, so that a foam (foamed board) of excellent properties sufficiently reflecting the properties of the resin can be produced.

When the foaming apparatus is designed in a tandem structure, however, it is necessary to optimize the discharge rate of the molten resin through the second-stage extruder relative to the feed rate of the molten resin from the first-stage extruder. If the balance of the extrusion rate through the second-stage extruder with the feed rate from the first-stage extruder is disturbed, the foaming behavior is disturbed or a defective foam product is obtained. Therefore, the cylinder barrel diameter (D) of the second-stage extruder may be preferably greater, more preferably greater by 1.3 to 3 times than the cylinder barrel diameter (D) of the first-stage extruder, and as the screw rotational speed, the screw rotational speed of the second-stage extruder may be set preferably at 1/4 or lower compared with the screw rotational speed of the first-stage extruder.

When the single extruder is used, on the other hand, no substantial variations are developed especially in foaming behavior by the production conditions. The single extruder is, therefore, advantageous when conducting stable production of good foams over a long time.

No limitation is imposed on the design of the die used in the extruder, but its openings which govern the discharge rate of the molten resin may desirably be designed in area, shape and length such that the pressure drop at each opening is controlled to from 5 to 20 MPa as described above. For example, a slit die, a multi-hole die (multi-strand die) or the like can be mentioned. Selection of a die, which satisfies these conditions, makes it possible to obtain a foam that exhibits sufficient thermal performance.

When a multi-hole die is used from the viewpoint of the readiness in controlling the external appearance and shape of a molded product after its foaming, the die holes in the extruder may preferably have a low-shear, circular shape, and the openings may preferably have a diameter of from 0.3 to 3.0 mm, with from 0.5 to 1.5 mm being more preferred. The die holes may preferably have a length of from 0.1 to 10 mm. The openings may preferably be arranged in plural rows and columns in a front face of the die.

If the diameter is smaller than 0.3 mm, strands that make up a foam are too small in diameter. When a resin having a high melt viscosity is extruded as in the present invention, the resin cannot pass through the die holes to cause localized clogging so that because of melt fractures, unevenness may be induced in the diameters of foamed strands to provide the resulting foam with an impaired external appearance; or the resin cannot pass through the die holes to cause clogging so that more spaces are formed as viewed on a section of the foam product and the foam product tends to tear when taken up. Such a small diameter is not preferred accordingly. If the diameter is greater than 3.0 mm, on the other hand, a resin pressure suited for foaming cannot be maintained so that voids may be formed in the resulting foam or the resulting foam may be provided with a reduced expansion ratio. When the foaming agent is added in a reduced amount, greater cells are formed so that the resulting foam may be provided with deteriorated heat insulating performance; or the resulting strands may be provided with an excessively large diameter, the resulting foam may be provided with greater surface roughness, and the post-forming of the foam for providing it with smoothness may be rendered difficult. Such a large diameter is not preferred accordingly. As an alternative, a slit die having an opening height of from 0.3 to 2.0 mm and an opening length of from 10 to 2, 000 mm or a similar die can also be used.

As a specific example of the process of the present invention for the production of a foam, the foam can be produced, for example, by providing an extruder equipped at an intermediate part of a cylinder barrel with a carbon dioxide feed line from a carbon dioxide feeder, heating the resin to a predetermined temperature and melt-kneading it into a uniform melt, feeding a predetermined amount of carbon dioxide through the feed line, and subjecting the melt to extrusion molding.

The foam obtained by the present invention as described above is preferred, because it has an expansion ratio of 20 times or higher, is provided with the above-described cell diameter and cell distribution factor despite the expansion ratio of 20 times or higher, and is equipped with sufficient thermal performance as a heat insulating material. The production of a foam with a high expansion ratio is preferred because the foam is provided with a lower specific gravity and the cost of the material to be used can be lowered. An excessively high expansion ratio of a foam is not preferred, because the foam is provided with reduced mechanical strength and is prone to damage under an external load or the like. Therefore, the expansion ratio may be preferably 100 times or lower, notably 50 times or lower.

The foam available from the present invention may have an average cell diameter of 200 $\mu$m or smaller, with 150 $\mu$m or smaller being preferred. Further, the average cell diameter can be controlled to from 50 to 100 $\mu$m. It is also possible to control the cell diameter distribution coefficient to 30% or smaller, more preferably 25% or smaller, notably 20% or smaller. It is, therefore, possible to control the average cell diameter to 200 $\mu$m or smaller and the cell diameter distribution coefficient to 30% or smaller.

The foam available from the present invention has a thermal conductivity of from 20 to 42 mW/mK as measured following JIS-A1412, and therefore, has suitable heat insulating performance. More preferably, the thermal conductivity of the foam may be from 20 to 37 mW/mK. A thermal conductivity higher than 42 mW/mK provides the foam with reduced heat insulating performance, and moreover, to obtain a thermal resistance of 0. 9 or higher as an evaluation standard for preferred thermal performance upon using a foam as a heat-insulating building board, the heat-insulating building board must have a thickness of 36 mm or greater. When this heat-insulating building board is used, for example, as a heat insulating material for a floor, it is greater in dimension than floor joists so that an inconvenience is experienced upon laying it. Such an excessively high thermal conductivity is therefore not preferred.

**Examples**

Examples and comparative examples will hereinafter be described to illustrate the present invention in further detail. It should however be borne in mind that the present invention is not limited only to these examples.

Example 1

A polypropylene resin (resin A), the MFR and melt tension at 230°C of which were 3.3 (g/10 min) and 7.6 g, respectively, was fed into a tandem single-screw extruder ("GT-50-65", manufactured by Kawata Mfg. Co., Ltd.) fitted at a first-stage extruder with a feed line for liquefied carbon dioxide and at a free end of a second-stage extruder with a die 1 (a multi-hole die having holes of 0.5 mm opening diameter arranged in 8 rows and 48 columns). The temperature of a cylinder barrel in the first-stage extruder was set at 230°C at a position of the cylinder barrel where the liquefied carbon dioxide was fed, the feed rate of the liquefied carbon dioxide was set at 1.7 kg/hr, the extrusion rate was adjusted based on the screw rotational speed of the first-stage extruder such that 6.8 parts by weight of liquefied carbon dioxide was contained per 100 parts by weight of the resin A, and the temperature of a cylinder barrel at a position immediately before the die was set at 182°C. Using the multi-stage extruder equipped with the multi-strand die, the screw rotational speed of the second-stage extruder was adjusted such that the pressure of the resin at the position of the die 1 became 8.2 MPa. By conducting extrusion foaming through the die, a sheet-shaped foam of the resin A was obtained. Details of production conditions are shown in Table 1-1 (details of production conditions for other examples and comparative examples to be descried hereinafter are also shown in tables).

Example 2

A sheet-shaped foam was obtained under similar conditions as in Example 1 except that the carbon dioxide was changed to supercritical carbon dioxide ("Carbon Dioxide-3", product of Kawata Mfg. Co., Ltd.).

Example 3

A rod-shaped foam was obtained under similar conditions as in Example 1 except that the die was changed from the multi-strand die to a single-hole die and the feed rate of the liquefied carbon dioxide was changed.

Example 4

A sheet-shaped foam was obtained under similar conditions as in Example 1 except that the tandem extruder for conducting extrusion in two stages was replaced by a single extruder for conducting feeding of carbon dioxide and extrusion through a die in one stage and the feed rate of the liquefied carbon dioxide was changed to 2.3 kg/hr. Details are shown in Table 1-1.

Example 5

A sheet-shaped foam was obtained under substantially similar conditions as in Example 1 except that the carbon dioxide was changed to supercritical carbon dioxide ("Carbon Dioxide-3", product of Kawata Mfg. Co., Ltd.).

Example 6

A rod-shaped foam was obtained under similar conditions as in Example 4 except that the die was changed from the multi-strand die to a single-hole die and the feed rate of the liquefied carbon dioxide was changed.

Comparative Example 1

A sheet-shaped foam was obtained under similar conditions as in Example 1 except that the resin was changed to a polypropylene resin (MT: 2.7 g).

Comparative Example 2

A sheet-shaped foam was obtained under similar conditions as in Example 1 except that the temperature of the cylinder barrel at the position thereof where the liquefied carbon dioxide was fed was changed to 180°C.

Comparative Example 3

A sheet-shaped foam was obtained under similar conditions as in Example 2 except that the temperature of the cylinder barrel at the position thereof where the liquefied carbon dioxide was fed was changed to 180°C.

Comparative Example 4

A sheet-shaped foam was obtained under similar conditions as in Example 1 except that the temperature of the cylinder barrel at the position immediately before the die was changed to 170°C.

Comparative Example 5

A sheet-shaped foam was obtained under similar conditions as in Example 1 except that the temperature of the cylinder barrel at the position immediately before the die was changed to 200°C.

Comparative Example 6

A sheet-shaped foam was obtained under similar conditions as in Example 4 except that the temperature of the cylinder barrel at the position thereof where the liquefied carbon dioxide was fed was changed to 180°C.

Comparative Example 7

A sheet-shaped foam was obtained under similar conditions as in Example 5 except that the temperature of the cylinder barrel at the position thereof where the liquefied carbon dioxide was fed was changed to 180°C.

Comparative Example 8

A sheet-shaped foam was obtained under similar conditions as in Example 1 except that the temperature of the cylinder barrel at the position thereof where the liquefied carbon dioxide was fed was changed to 250°C and the temperature of the cylinder barrel at the position immediately before the die was changed to 215°C.

Comparative Example 9

A sheet-shaped foam was obtained under similar conditions as in Example 1 except that the temperature of the cylinder barrel at the position thereof where the liquefied carbon dioxide was fed was changed to 210°C and the temperature of the cylinder barrel at the position immediately before the die was changed to 170°C.

Comparative Example 10

A sheet-shaped foam was obtained under similar conditions as in Example 1 except that the temperature of the cylinder barrel at the position thereof where the liquefied carbon dioxide was fed was changed to 210°C and the temperature of the cylinder barrel at the position immediately before the die was changed to 200°C.
Physical properties and performance ((a) density, (b) expansion ratio, (c) average cell diameter, (d) cell diameter distribution coefficient, and (e) thermal conductivity) of the resin foams obtained above in Examples 1-6 and Comparative Examples 1-10 were measured or evaluated by the following methods.

(a) Density: Each foam obtained was cut into a small specimen of $20 \times 20 \times 2.5$ (cm), its weight and the lengths of its respective sides were measured, and the density of the foam was determined in accordance with the following calculation formula:

$$(Density~of~the~foam,~G/L)$$
$$= (weight~of~the~foam,~G)/(volume~of~the~foam,~L)$$

(b) Expansion ratio: From the specific gravity of the resin and the measurement result of the density as determined by the method (a), the expansion ratio was determined in accordance with the following formula:

$$(Expansion~ratio)$$
$$= (specific~gravity~of~the~resin)/(density~of~the$$
$$foam)$$

(c) Average cell diameter: Each foam obtained was cut into a small specimen, and one of its sections was observed at 50x magnification under a scanning electron microscope SEM ("SEM SUPER SCAN 220", manufactured by Shimadzu Corporation). Over the resulting image, straight lines of practically 2 mm in length were drawn. By counting cells on the straight lines, the average cell diameter was calculated and determined by the following formula:

$$(\text{Average cell diameter, } \mu\text{m})$$

$$= (2000 \times 10)/(\text{number of cells on the 10 straight lines})$$

(d) Cell diameter distribution coefficient: Each foam obtained was cut into a small specimen, and one of its sections was observed at $50\times$ magnification under the scanning electron microscope SEM ("SEM SUPER SCAN 220", manufactured by Shimadzu Corporation). The mean of cell diameters of about 10 to 20 cells and the standard deviation of cell diameter were calculated. Based on their values, the cell diameter distribution factor was calculated by the following calculation formula:

$$(\text{Cell diameter distribution coefficient})$$

$$= (\text{standard deviation of cell diameter})/(\text{mean of cell diameters})$$

(e) Thermal conductivity: Following JISA-1412, each foam obtained was cut into a small specimen of 20x20x2 (cm). Using a thermal conductivity tester ("HC-074", manufactured by Eko Instruments Co., Ltd.), its thermal conductivity was measured.

(f) Melt tension: Determined at a measurement temperature of 230°C, extrusion speed of 10 mm/min and take-up speed of 3.1 m/min by "CAPIROGRAPH 1C" (manufactured by Toyo Seiki Seisaku-sho, Ltd.). It is to be noted that in the measurement, an orifice of 8 mm in length and 2.095 mm in diameter was used.
(g) External appearance: Evaluated by the following two methods (except for Examples 3 and 6 which were evaluated only by Evaluation 1).

Evaluation 1:

A cut surface of each foam was observed at 100x magnification under a microwatcher. In an image of 9.32 mm $\times$ 12.45 mm, surface voids were counted. An average was determined based on 5 specimens. The external appearance was ranked "A", "B" or "C" when the average was as follows:

Number of voids Fewer than 1: A
Fewer than 3: B
3 or more: C

Evaluation 2:

A cut surface of each foam was similarly observed for spaces between strands at $100\times$ under the microwatcher. The position of a large space was measured. An average was determined based on 5 specimens. The external appearance was ranked "A", "B" or "C" when the average was as follows:

Space Narrower than 0.5 mm: A
Narrower than 1.0 mm: B
1.0 mm or wider: C

The external appearance was ranked "A" when the ranks in Evaluations 1 and 2 were both "A", was ranked "B" when the ranks were "A" "B" or "B""B", or was ranked "C" when even one of the ranks was "C".

The production conditions employed in the present invention and the physical properties and ranks of the obtained foams are collectively shown in Tables 1-1 and 1-2 and Tables 2-1 and 2-2.

Table 1-1

| Production conditions | Examples | | | |
|---|---|---|---|---|
| | 1 | 2 | 3 | 4 |
| MT of resin (g/230°C) | 7.6 | 7.6 | 7.6 | 7.6 |
| MFR of resin (g/10 min/230°C) | 3.3 | 3.3 | 3.3 | 3.3 |
| Log(MT)+1.33Log(MFR) | 1.6 | 1.6 | 1.6 | 1.6 |
| State of $CO_2$ near gas inlet port | Liquefied | Supercritical | Liquefied | Liquefied |
| Feed rate of foaming gas (kg/hr) | 1.7 | 1.7 | 1.0 | 2.3 |
| Added amount of foaming gas (parts by weight) | 6.8 | 6.8 | 4 | 4.5 |
| Foaming extrusion apparatus | Tandem | Tandem | Tandem | Single |
| Cylinder barrel diameter of first-stage extruder (mm) | 50 | 50 | 50 | 90 |
| L/D of screw in first-stage extruder (mm) | 35 | 35 | 35 | 50 |

Table 1-1 (Cont'd)

| Production conditions | Examples | | | |
|---|---|---|---|---|
| | 1 | 2 | 3 | 4 |
| Cylinder barrel diameter of second-stage extruder (mm) | 65 | 65 | 65 | - |
| L/D of screw in second-stage extruder (mm) | 35 | 35 | 35 | - |
| Die | Multi-hole die | Multi-hole die | Rod | Multi-hole die |
| Opening area of die ($mm^2$) | 250 | 250 | 220 | 250 |
| Extrusion discharge rate (kg/hr) | 25 | 25 | 25 | 50 |
| Discharge rate per opening area ($kg/hr/mm^2$) | 0.100 | 0.100 | 0.114 | 0.200 |
| Cylinder barrel temperature at position where foaming agent is introduced (°C) | 230 | 230 | 230 | 220 |
| Temperature of resin immediately proximal to die (°C) | 182 | 180 | 180 | 180 |
| Foaming pressure (MPa) | 8.2 | 7.8 | 6 | 7.8 |

Table 1-1 (Cont'd)

| Production conditions | Examples | | Comp. Ex. | |
|---|---|---|---|---|
| | 5 | 6 | 1 | 2 |
| MT of resin (g/230°C) | 7.6 | 7.6 | 2.7 | 7.6 |
| MFR of resin (g/10 min/230°C) | 3.3 | 3.3 | 2.3 | 3.3 |
| Log(MT)+1.33Log(MFR) | 1.6 | 1.6 | 0.9 | 1.6 |
| State of $CO_2$ near gas inlet port | Supercritical | Liquefied | Liquefied | Liquefied |
| Feed rate of foaming gas (kg/hr) | 2.3 | 1.5 | 1.7 | 1.7 |
| Added amount of foaming gas (parts by weight) | 4.5 | 3.0 | 6.8 | 6.8 |
| Foaming extrusion apparatus | Single | Single | Tandem | Tandem |
| Cylinder barrel diameter of first-stage extruder (mm) | 90 | 90 | 50 | 50 |
| L/D of screw in first-stage extruder (mm) | 50 | 50 | 35 | 35 |

Table 1-1 (Cont'd)

| Production conditions | Examples | | Comp. Ex. | |
|---|---|---|---|---|
| | 5 | 6 | 1 | 2 |
| Cylinder barrel diameter of second-stage extruder (mm) | - | - | 65 | 65 |
| L/D of screw in second-stage extruder (mm) | - | - | 35 | 35 |
| Die | Multi-hole die | Rod | Multi-hole die | Multi-hole die |
| Opening area of die ($mm^2$) | 250 | 220 | 250 | 250 |
| Extrusion discharge rate (kg/hr) | 50 | 50 | 25 | 25 |
| Discharge rate per opening area ($kg/hr/mm^2$) | 0.200 | 0.227 | 0.100 | 0.100 |
| Cylinder barrel temperature at position where foaming agent is introduced (°C) | 220 | 210 | 230 | 180 |
| Temperature of resin immediately proximal to die (°C) | 182 | 178 | 180 | 180 |
| Foaming pressure (MPa) | 7.5 | 5.7 | 3.3 | 8.3 |

Table 1-2

| Production conditions | Comparative Examples | | | |
|---|---|---|---|---|
| | 3 | 4 | 5 | 6 |
| MT of resin (g/230°C) | 7.6 | 7.6 | 7.6 | 7.6 |
| MFR of resin (g/10 min/230°C) | 3.3 | 3.3 | 3.3 | 3.3 |
| Log(MT)+1.33Log(MFR) | 1.6 | 1.6 | 1.6 | 1.6 |
| State of $CO_2$ near gas inlet port | Supercritical | Liquefied | Liquefied | Liquefied |
| Feed rate of foaming gas (kg/hr) | 1.7 | 1.7 | 1.7 | 2.3 |
| Added amount of foaming gas (parts by weight) | 6.8 | 6.8 | 4.5 | 4.5 |
| Foaming extrusion apparatus | Tandem | Tandem | Tandem | Single |
| Cylinder barrel diameter of first-stage extruder (mm) | 50 | 50 | 50 | 90 |
| L/D of screw in first-stage extruder (mm) | 35 | 35 | 35 | 50 |

Table 1-2 (Cont'd)

| Production conditions | Comparative Examples | | | |
|---|---|---|---|---|
| | 3 | 4 | 5 | 6 |
| Cylinder barrel diameter of second-stage extruder (mm) | 65 | 65 | 65 | – |
| L/D of screw in second-stage extruder (mm) | 35 | 35 | 35 | – |
| Die | Multi-hole die | Multi-hole die | Multi-hole die | Multi-hole die |
| Opening area of die (mm$^2$) | 250 | 250 | 250 | 250 |
| Extrusion discharge rate (kg/hr) | 25 | 25 | 25 | 50 |
| Discharge rate per opening area (kg/hr/mm$^2$) | 0.100 | 0.100 | 0.100 | 0.200 |
| Cylinder barrel temperature at position where foaming agent is introduced (°C) | 180 | 230 | 230 | 180 |
| Temperature of resin immediately proximal to die (°C) | 180 | 170 | 200 | 180 |
| Foaming pressure (MPa) | 8.1 | 11.3 | 4.5 | 9.2 |

Table 1-2 (Cont'd)

| Production conditions | Comparative Examples | | | |
|---|---|---|---|---|
| | 7 | 8 | 9 | 10 |
| MT of resin (g/230°C) | 7.6 | 7.6 | 7.6 | 7.6 |
| MFR of resin (g/10 min/230°C) | 3.3 | 3.3 | 2.3 | 4.3 |
| Log(MT)+1.33Log(MFR) | 1.6 | 1.6 | 0.9 | 1.7 |
| State of $CO_2$ near gas inlet port | Supercritical | Liquefied | Liquefied | Liquefied |
| Feed rate of foaming gas (kg/hr) | 2.3 | 2.3 | 2.3 | 2.3 |
| Added amount of foaming gas (parts by weight) | 4.5 | 4.5 | 4.5 | 4.5 |
| Foaming extrusion apparatus | Single | Single | Single | Single |
| Cylinder barrel diameter of first-stage extruder (mm) | 90 | 90 | 90 | 90 |
| L/D of screw in first-stage extruder (mm) | 50 | 50 | 50 | 50 |

Table 1-2 (Cont'd)

| Production conditions | Comparative Examples | | | |
|---|---|---|---|---|
| | 7 | 8 | 9 | 10 |
| Cylinder barrel diameter of second-stage extruder (mm) | - | - | - | - |
| L/D of screw in second-stage extruder (mm) | - | - | - | - |
| Die | Multi-hole die | Multi-hole die | Multi-hole die | Multi-hole die |
| Opening area of die (mm²) | 250 | 250 | 250 | 250 |
| Extrusion discharge rate (kg/hr) | 50 | 50 | 50 | 50 |
| Discharge rate per opening area (kg/hr/mm²) | 0.200 | 0.200 | 0.200 | 0.200 |
| Cylinder barrel temperature at position where foaming agent is introduced (°C) | 180 | 250 | 210 | 210 |
| Temperature of resin immediately proximal to die (°C) | 180 | 215 | 170 | 200 |
| Foaming pressure (MPa) | 8.6 | 3.2 | 7.4 | 4.4 |

Table 2-1

| | | Examples | | | | | | Comp. Ex. | |
|---|---|---|---|---|---|---|---|---|---|
| | | 1 | 2 | 3 | 4 | 5 | 6 | 1 | 2 |
| Physical properties of foams | Product density (kg/m³) | 28 | 25 | 38 | 34 | 29 | 41 | 182 | 57 |
| | Expansion ratio (times) | 32 | 36 | 24 | 27 | 31 | 22 | 5 | 16 |
| | Average cell diameter (µm) | 198 | 174 | 728 | 219 | 152 | 431 | 117 | 141 |
| | Cell diameter distribution coefficient (%) | 21 | 22 | 27 | 25 | 23 | 24 | 41 | 23 |
| | Percentage of closed cells (%) | 67 | 79 | 88 | 69 | 56 | 89 | 98 | 24 |
| | Thermal conductivity (w/mK) | 0.034 | 0.032 | 0.039 | 0.036 | 0.033 | 0.038 | 0.129 | 0.049 |
| Performance ranks | External appearance | A | A | B | A | A | B | C | C |
| | Expansion ratio | B | A | B | B | B | B | D | C |
| | Cell diameter distribution coefficient (%) | B | A | B | B | A | B | D | B |
| | Heat insulating performance | A | A | B | B | A | B | D | D |
| | Overall rank | B˙ | A | B˙ | B | A˗ | B˙ | D | C |

Table 2-2

| | | Comparative Examples | | | | | | | |
|---|---|---|---|---|---|---|---|---|---|
| | | 3 | 4 | 5 | 6 | 7 | 8 | 9 | 10 |
| Physical properties of foams | Product density (kg/m³) | 38 | 65 | 76 | 54 | 48 | 114 | 51 | 152 |
| | Expansion ratio (times) | 24 | 14 | 12 | 17 | 19 | 8 | 18 | 6 |
| | Average cell diameter (µm) | 139 | 152 | 109 | 168 | 152 | 221 | 182 | 127 |
| | Cell diameter distribution coefficient (%) | 39 | 33 | 46 | 35 | 43 | 47 | 37 | 42 |
| | Percentage of closed cells (%) | 43 | 18 | 97 | 77 | 64 | 89 | 81 | 96 |
| | Thermal conductivity (w/mK) | 0.042 | 0.053 | 0.063 | 0.047 | 0.045 | 0.071 | 0.044 | 0.082 |
| Performance ranks | External appearance | C | A | C | C | B | C | B | C |
| | Expansion ratio | B | C | D | C | C | D | C | D |
| | Cell diameter distribution coefficient (%) | B | C | D | C | D | D | C | D |
| | Heat insulating performance | C | D | D | C | C | D | C | D |
| | Overall rank | C | C˙ | D | C˙ | C˗ | D | C | D |

## Industrial Applicability

According to the present invention, it is possible to provide a process for producing a polypropylene-based resin foam having a high expansion ratio, uniformly dispersed foam cells and a good surface appearance.

**Claims**

1. A process for producing a polypropylene-based resin foam by subjecting a linear polypropylene-based resin, which has a melt tension at 230°C of from 5 to 30 g and satisfies the below-described formula (1) in which MFR stands for a melt flow rate of the linear polypropylene-based resin at 230°C and MT stands for the melt tension at 230°C, to melt extrusion through an extruder while injecting carbon dioxide into the resulting molten resin to foam the molten resin, which comprises subjecting the extruder to temperature control such that the extruder has a temperature of from 200 to 240°C at a position of a cylinder barrel thereof, where the carbon dioxide is to be introduced, and the cylinder barrel has a temperature of from 175 to 190°C at a position before the foaming; and then discharging the molten resin into atmospheric pressure with a discharge rate of the molten resin per opening area of a die being controlled to give a resin pressure of from 5 to 20 MPa at a position immediately proximal to an opening of the die, thereby foaming the molten resin.

$$\mathtt{Log(MT)>-1.33Log(MFR)+1.2} \qquad \mathtt{(1)}$$

2. The process according to claim 1, wherein the extruder is a single-stage extruder (single extruder).

3. The process according to claim 2, wherein the single extruder has a cylinder barrel diameter of from 20 to 300 mm and an L/D ratio of from 20 to 40.

4. The process according to claim 1, wherein the extruder is a tandem extruder having a cylinder barrel diameter of from 20 to 300 mm and an L/D ratio of from 20 to 40, and a second-stage extruder is greater in cylinder barrel diameter than a first-stage extruder.

5. The process according to claim 4, wherein the second-stage extruder is set at a screw rotational speed not higher than 1/4 of that of the first-stage extruder.

6. The process according to any one of claims 1-5, wherein the carbon dioxide is liquefied carbon dioxide which is not in a supercritical state.

| | |
|---|---|
| **INTERNATIONAL SEARCH REPORT** | International application No. |
| | PCT/JP2008/073379 |

A. CLASSIFICATION OF SUBJECT MATTER
*B29C47/82(2006.01)i, B29C47/00(2006.01)i, B29C47/50(2006.01)i, B29C47/66(2006.01)i, C08J9/12(2006.01)i, B29K23/00(2006.01)n, B29K105/04(2006.01)n*

According to International Patent Classification (IPC) or to both national classification and IPC

B. FIELDS SEARCHED

Minimum documentation searched (classification system followed by classification symbols)
B29C47/00-47/96, C08J9/00-9/42

Documentation searched other than minimum documentation to the extent that such documents are included in the fields searched
Jitsuyo Shinan Koho         1922-1996    Jitsuyo Shinan Toroku Koho    1996-2009
Kokai Jitsuyo Shinan Koho    1971-2009    Toroku Jitsuyo Shinan Koho    1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2007/004524 A1 (Asahi Fiber Glass Co., Ltd.), 11 January, 2007 (11.01.07), Claims; Par. Nos. [0020] to [0022], [0030], [0032], [0045] to [0058] & KR 10-2008-0042046 A  & CN 101203552 A | 1-6 |
| Y | JP 2005-154601 A (Sumitomo Rubber Industries, Ltd.), 16 June, 2005 (16.06.05), Claims; Par. Nos. [0010], [0014], [0020], [0037], [0040], [0045] to [0055]; Fig. 2 (Family: none) | 1-6 |

[X] Further documents are listed in the continuation of Box C.    [ ] See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 March, 2009 (10.03.09) | 24 March, 2009 (24.03.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2008/073379 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y<br>A | JP 2002-337186 A   (Mitsui Chemicals, Inc.),<br>27 November, 2002 (27.11.02),<br>Claims; Par. Nos. [0033] to [0034], [0063]<br>(Family: none) | 6<br>1-5 |
| Y<br>A | JP 2001-150520 A   (Kanazawa Institute of<br>Technology),<br>05 June, 2001 (05.06.01),<br>Claims; Par. Nos. [0013] to [0023]<br>(Family: none) | 6<br>1-5 |
| A | JP 2007-136966 A   (Asahi Fiber Glass Co., Ltd.),<br>07 June, 2007 (07.06.07),<br>Claims; Par. Nos. [0013] to [0014], [0020] to<br>[0024], [0047] to [0055]; table 1<br>(Family: none) | 1-6 |

Form PCT/ISA/210 (continuation of second sheet) (April 2007)

**EP 2 223 790 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007004524 A1